# EUROPEAN PATENT APPLICATION

(11) **EP 2 485 360 A1**
(43) Date of publication of application: **08.08.2012**
(21) Application number: 10819966.2
(22) Date of filing: 06.09.2010
(51) Int. Cl.: H02J 3/38, H02J 7/35, H02J 13/00

(54) **ELECTRIC POWER MANAGEMENT SYSTEM**

(30) Priority: 29.09.2009 JP 2009225068
(71) Applicant: Panasonic Corporation, Kadoma-shi Osaka 571-8501 (JP)
(72) Inventor: KUNIYOSI, Kenji, Osaka 540-6207 (JP)
(74) Representative: Turi, Michael
(86) International application number: PCT/IB2010/002225
(87) International publication number: WO 2011/039585

(57) **Abstract**

An electric power management system includes a power met er connected to a power system of a commercial power source an d a power conditioner connected to the power meter, a power ge nerating device and an electric appliance. The power meter a nd the power conditioner are configured to exchange power inf ormation through a communications part at the side of the pow er meter.

## Description

### Field of the Invention

The present invention relates to an electric power management system that includes a power conditioner through which the electric power generated by a power generation apparatus, e.g., a photovoltaic power generation apparatus, is used in association with the electric power generated by an electric power system of a commercial power source.

### Background of the Invention

In recent years, the number of houses and offices equipped with a photovoltaic power generation apparatus (or a solar cell) tends to increase. The solar cell has power generation characteristics of generating an increased amount of electric power as the illuminance of sunlight grows higher, generating a reduced amount of electric power as the illuminance of sunlight becomes lower due to the rainy weather or other causes and stopping power generation at the nighttime when there is no sunlight. For that reason, there are many cases where the power generation pattern is not consistent with the power consumption pattern in houses or other places. Further, it is often the case that the generated power amount becomes excessively smaller than the consumed power amount. Accordingly, even if a house is equipped with a solar cell, the house is usually connected to an electric power system of a commercial power source so that, when the generated power amount is insufficient, the deficient electric power can be inputted (supplied) or bought from the commercial power source.

The electric power generated by the solar cell differs in nature from the electric power of the commercial power source. In light of this, the electric power generated by the solar cell is converted, by a power conditioner including an inverter and the like, to an electric power having the same nature as that of the alternating current power of the commercial power source and is used in association with the electric power system of the commercial power source. This makes it possible to use, in combination, the electric power generated by the solar cell in a house or other places and the electric power of the commercial power source.

In other words, the power conditioner is a device for converting the electric power generated by the solar cell so as to be made consistent with the electric power of the commercial power source in a voltage, a frequency and a phase and consequently using the electric power generated by the solar cell in association with the electric power of the commercial power source. One example of the power conditioner is described in Patent document 1.

The power conditioner described in Patent document 1 is connected to a commercial power source and a solar cell for supplying electric power, and an electric appliance consuming the electric power. The power conditioner is configured such that the electric power generated by the solar cell is supplied to the electric appliance in association with the electric power of the commercial power source through the use of an inverter. The electric power of the commercial power source can also be supplied to the electric appliance through a switching device formed of a semiconductor. If the amount of the electric power generated by the solar cell is enough to provide the electric power consumed by the electric appliance, the switching device is opened to supply only the electric power generated by the solar cell to the electric appliance. On the other hand, if the amount of the electric power generated by the solar cell is insufficient, the switching device is closed to supply the electric power generated by the solar cell in association with the electric power of the commercial power source to the electric appliance.
Patent document 1: Japanese Patent No. 2503402

In general, the user of a solar cell is highly interested in the trend of the electric power generated by the solar cell. Thus the user wishes to easily check out the various electric power information including not only the amount of the electric power generated by the solar cell but also the amount of the electric power inputted (supplied) from the commercial power source and the amount of the electric power consumed by the electric appliance and the like.

In view of this, it may be considerable to provide the power conditioner to collect the amount of the electric power generated by the solar cell and the amount of the electric power consumed by the electric appliance and to collect, from a power meter, the accurate amount of the electric power inputted (supplied) from and outputted (reversely supplied) to the commercial power source, so that the user can check out the various kinds of electric power information.

However, the power conditioner is usually installed in an indoor region from the terms of the enhanced installation environment and the user's convenience in operation, while the power meter is installed in an outdoor region for the purpose of meter reading. It is not easy for the power conditioner installed in the indoor region to effectively collect the amount of the electric power measured by the power meter installed in the outdoor region.

### Summary of the Invention

In view of the above, the present invention provides an electric power management system capable of easily performing, by using a power conditioner, a centralized management of various kinds of information including the information on the amount of electric power measured by a power meter connected to an electric power system of a commercial power source.

In accordance with an embodiment of the present inventio n, there is provided an electric power management system, inc luding: a power meter connected to a power system of a commerc ial power source; and a power conditioner connected to the po wer meter, a power generating device and an electric applianc e. The power meter and the power conditioner exchange power i nformation through a communications part at a side of the pow er meter.

In the electric power management system described above , the power meter may be connected to the power system of the commercial power source to acquire power information from an electric power inputted from the power system and an electric power outputted to the power system. Further, the power cond itioner may be configured to collect power information of the power generating device; power information of the electric a ppliance; and the power information of the electric power inp utted from the power system and the power information of the e lectric power outputted to the power system, which are acquir ed from the power meter through the communications part at th e side of the power meter, and to manage the electric power in putted from the power system and the electric power outputted to the power system, based on the collected power informatio n.

In general, the power meter is arranged outside a house or a building and the power conditioner is arranged inside th e house or the building. This makes it difficult for the powe r conditioner to acquire the power information such as the am ount of electric power measured by the power meter.

With such configuration, the power meter and the power conditioner can make communications with each other through the communications part at the side of the power meter. Through the communications with the power meter, the power conditioner can easily acquire from the power meter the power information on the voltage, current, electric power amount, frequency and phase of the electric power inputted from or outputted to the commercial power source, which is measured by the power meter. As a result, the power conditioner can accurately acquire the power information on the electric power inputted from or outputted to the commercial power source, which does not entail the loss caused by outdoor wiring lines and coincides with the meter reading value of a power company. This enables the electric power management system to accurately and properly manage the electric power.

In addition, the power information on the electric power generated by the power generating devices, the power information on the electric power consumed by the respective electric appliances and the power information on the electric power measured by the power meter are collected in the power conditioner. It is therefore possible to appropriately carry out the electric power management of the entire power supply system based on the power information stated above. As a result, it is possible for the power conditioner to accurately perform the centralized power management including the management of the input and output of the electric power to and from the power system. This makes it possible to increase the utility value of the electric power management system.

Further, the electric power management system described above may further include a display device for acquiring the power information collected in the power conditioner from the power conditioner through a communications part at a side of the display device and visually displaying the acquired power information on a display unit.

With such configuration, the display device can acquire the power information collected in the power conditioner thro ugh the communications part at the side of the display device and can visibly display the display information generated fro m the acquired power information in the form of an image such as a numerical number or a graph. This makes it easy to check out the power information collected in the power conditioner . Accordingly, it is possible to enhance the utility value of the electric power management system.

Further, the communications part at the side of the display device may include a subordinate extension unit provided in the power conditioner to transmit the power information collected in the power conditioner and a communications unit provided in the display device to receive the power information transmitted from the subordinate extension unit.

With such configuration, it is possible to easily transf er the power information of the power conditioner to the disp lay device, by providing the subordinate extension unit in th e power conditioner and the communications unit in the displa y device and enabling communications between the subordinate extension unit and the communications unit.

Further, the communications part at the side of the powe r meter may include a first extension unit provided in the pow er meter to transmit the power information acquired from the power meter and a second extension unit provided in the power conditioner to receive the power information transmitted from the first extension unit.

With such configuration, it is possible for the first extension unit of the power meter and the second extension unit of the power conditioner to mutually transfer the power information of the power meter and the power information of the power conditioner, by providing the first extension unit and the second extension unit and enabling communications between the first extension unit and the second extension unit.

Further, the second extension unit of the power conditioner may serve as the subordinate extension unit of the corresponding power conditioner.

With such configuration, the communications between the power meter and the power conditioner and the communications between the power conditioner and the display device can be p erformed in the same communications method. In other words, the communications methods of the first communications part a nd the second communications part are unified into a single m ethod. This makes it possible to simplify the structure of th e subordinate extension unit of the power conditioner include d in the first communications part and the second communicati ons part. This also helps reduce the effort required in insta lling communications equipment.

Further, the power meter may further include a device co mmunicatively connected to a system server for managing the p ower system of the commercial power source and configured to acquire the power information collected in the power conditio ner through the communications part at the side of the power m eter and transfer the acquired power information to the syste m server.

With such configuration, the system server managing the power system can acquire the power information of the power c onditioner and can estimate the power consumption trend using the power management data contained in the power information thus acquired. For example, if the system server is allowed to manage the power system based on the power consumption tre nd, it is possible to further stabilize the electric power of the power system and to increase the utility value of the elec tric power management system.

Further, the power conditioner may be configured to acquire power information held by the system server through the power meter and to manage the acquired power information.

With such configuration, the power conditioner acquires the power information of the system server from the power met er and manages the power information together with the electr ic power inputted from and outputted to the power system. As a result, for example, if the power information of the system server contains the information for stabilization of the syst em, the power conditioner can adjust the electric power input ted to and outputted from the commercial power source, thereby stabilizing the power system. If the power information of the system server contains the billing information, it is poss ible to perform the management of electric power according to the charged fare.

### Brief Description of the Drawings

The objects and features of the present invention will b ecome apparent from the following description of preferred em bodiments given in conjunction with the accompanying drawings , in which:
Fig. 1 is a functional block diagram showing the schemat ic configuration of a power supply system which forms a part of an electric power management system according to a first e mbodiment of the present invention;
Fig. 2 is a configuration view showing the specific conf iguration of the electric power management system of the fir st embodiment;
Figs. 3A and 3B are views schematically showing a connec tion configuration that enables communications between a pow er meter, a power conditioner and a display device unit emplo yed in the electric power management system of the first embo diment;
Figs. 4A and 4B are views schematically showing a connec tion configuration that enables communications between a pow er meter, a power conditioner and a display device unit emplo yed in an electric power management system according to a sec ond embodiment;

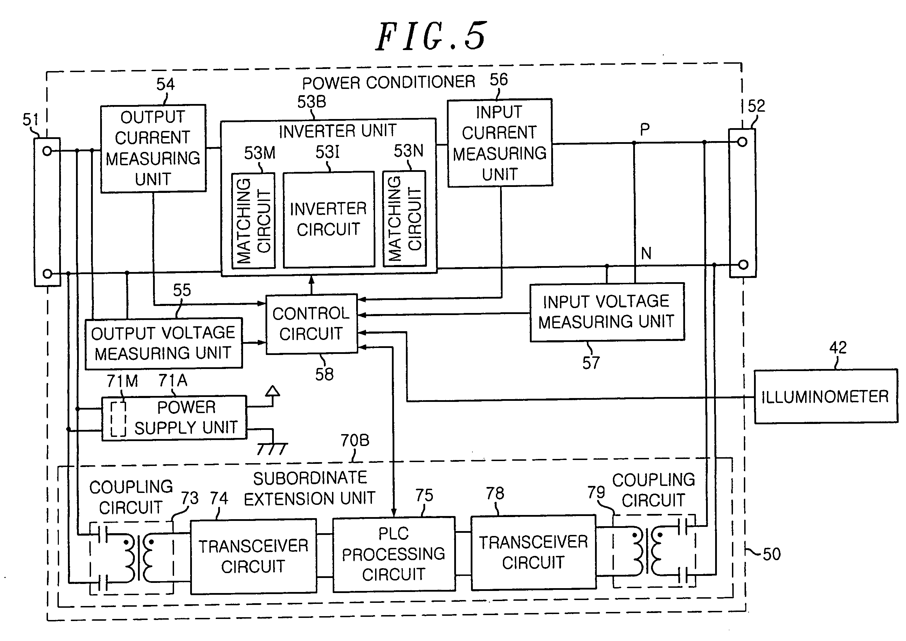

Fig. 5 is a configuration view showing one example of a subordinate extension unit of the power conditioner employed in the electric power management systems of the first and se cond embodiments;
Fig. 6 is a view schematically showing one example of th e connection for communications between the power meter, the power conditioner and the display device unit employed in th e electric power management systems of the first and second e mbodiments; and
Fig. 7 is a view schematically showing another example o f the connection for communications between the power meter, the power conditioner and the display device unit employed i n the electric power management systems of the first and seco nd embodiments.

### Detailed Description of the Preferred Embodiments

Hereinafter, embodiments of the present invention will be described with reference to the accompanying drawings whic h form a part hereof. Throughout the drawings, like referenc e numerals will be given to like parts, and redundant descrip tion thereof will be omitted.

### (First Embodiment)

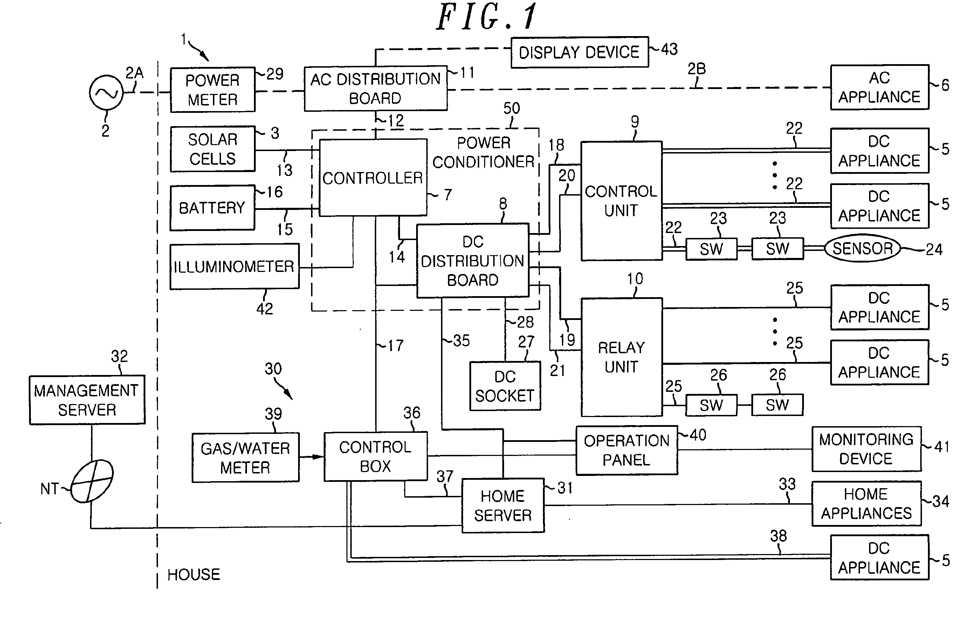

An electric power management system in accordance with a first embodiment of the present invention will be described in detail. Fig. 1 is a functional block diagram showing a sc hematic configuration of a power supply system 1 which forms a part of the electric power management system.

As shown in Fig. 1, a house is provided with the power s upply system 1 for supplying an electric power to a variety of home appliances (such as an illuminating device, an air cond itioner, an electrical device and an audiovisual device). Th e power supply system 1 supplies the electric power of a home-use commercial AC source (or a commercial power source) 2 and further supplies the electric power from a solar cell 3 gener ating electric power with the sunlight to operate various kin ds of appliances. The power supply system 1 supplies the elec tric power to not only DC appliances 5 operating with the DC p ower inputted from a DC power supply but also an AC appliance 6 operating with the AC power inputted from an AC power source 2. In the following description, a single house will be take n as an example of the building to which the present invention is applied. However, it is not limited thereto. For example , the present invention may also be applied to building or col lective housings such as an office, a shopping arcade and a fa ctory.

The power supply system 1 is provided with a power condi tioner 50 including a controller 7 and a DC distribution boar d (in which a DC breaker is arranged) 8. The power supply sys tem 1 is further provided with a control unit 9 and a relay un it 10 for controlling operations of the DC appliances 5 insta lled in the house.

An AC distribution board 11 for dividing the AC power is connected to the controller 7 through an AC power line 12. T he controller 7 is connected to the commercial AC power sourc e 2 via the AC distribution board 11 and is connected to the s olar cell 3 via a DC power line 13. The controller 7 receives AC power from the AC distribution board 11 and receives DC po wer from the solar cell 3. The controller 7 converts the AC p ower and the DC power to specified DC power to be used as the source power of the appliances. The controller 7 outputs the converted DC power to the DC distribution board 8 through a DC power line 14 or to a battery 16 through a DC power line 15 t o thereby store the DC power in the battery 16. Not only does the controller 7 receive the AC power from the AC distributio n board 11 but also the controller 7 can convert the electric power from the solar cell 3 or the battery 16 to an AC power a nd supply the AC power to the AC distribution board 11. The c ontroller 7 exchanges data with the DC distribution board 8 t hrough a signal line 17. An illuminometer 42 for measuring th e illuminance of the light irradiated on the solar cell 3 is c onnected to the controller 7. Illuminance information as env ironmental information such as an illuminance value is transm itted from the illuminometer 42 to the controller 7.

The DC distribution board 8 is a kind of breaker for the DC power. The DC distribution board 8 divides the DC power i nputted from the controller 7 and outputs the divided DC powe r to the control unit 9 through a DC power line 18 or to the r elay unit 10 through a DC power line 19. The DC distribution board 8 exchanges data with the control unit 9 through a signa l line 20 or with the relay unit 10 through a signal line 21.

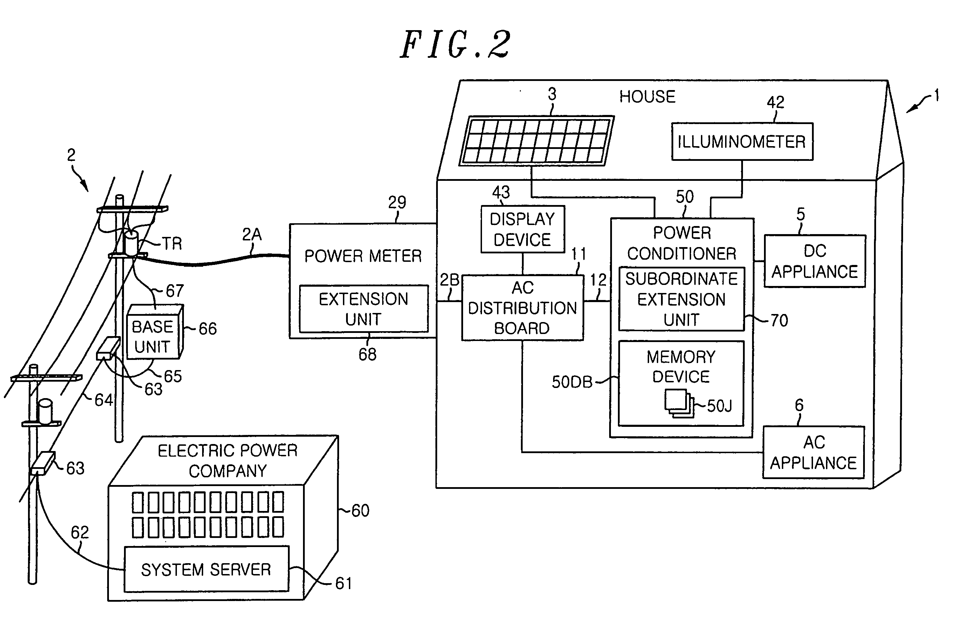

In the power supply system 1, the power conditioner 50 f or coordinating power management in the power supply system 1 is configured in such a fashion as to include the controller 7 and the DC distribution board 8. The power conditioner 50 i s provided with a memory device 50DB (see Fig. 2) storing vari ous kinds of information. In other words, the power conditio ner 50 is connected to the AC distribution board 11, the solar cell 3, the battery 16 and the DC appliances 5 through indivi dual power lines. Based on this, the power conditioner 50 is configured to measure the power information on the AC power s upplied or reversely supplied (inputted or outputted) to or f rom the AC power source 2 and to measure the power information (power generation information) on the electric power generat ed by the solar cell 3 and the power information on the DC pow er consumed in the DC appliances 5.

Examples of the power information on the AC power includ e a voltage, a current, an electric power amount, a frequency and a phase. Examples of the power information on the DC powe r include a voltage, a current and an electric power amount. The power information selected from them is measured in the p ower conditioner 50. In the power conditioner 50, the power i nformation on the AC power source 2 and the power information of the solar cell 3 and the DC appliances 5 thus measured are collected in the memory device 50DB as power-related informat ion 50J (see Fig. 2).

A plurality of DC appliances 5 is connected to the contr ol unit 9. The DC appliances 5 are connected to the control u nit 9 through respective DC supply lines 22 through which bot h DC power and data can be transmitted by using the same wirin g. Communications signals for transmitting data with a highfrequency carrier wave are overlapped with the DC power to be supplied to the DC appliances 5 and are transmitted through t he respective DC supply lines 22. For example, both the elect ric power and the data are transmitted to each of the DC appli ances 5 by using a pair of lines. The control unit 9 receives the DC power for the DC appliances 5 through a DC power line 18 and determines how to control which of the DC appliances 5 based on an operation instruction obtained from the DC distri bution board 8 through a signal line 20. Then, the control un it 9 outputs the DC power and the operation instruction to the designated DC appliances 5 through the corresponding DC supp ly lines 22, thereby controlling the operations of the DC app liances 5.

Switches 23 that are manipulated when the operations of the DC appliances 5 are switched over are connected to the con trol unit 9 through a DC supply line 22. In addition, a senso r 24 for detecting radio waves transmitted from, e.g., an inf rared remote controller is connected to the control unit 9 th rough the DC supply line 22. Accordingly, the DC appliances 5 are controlled by transmitting communications signals throug h the DC supply lines 22 in response not only to the operation instruction from the DC distribution board 8 but also to the manipulation of the switches 23 and the detection in the sens or 24.

Further, the control unit 9 can transfer the power infor mation on the electric power amounts consumed by the respecti ve DC appliances 5 and the like to the power conditioner 50 (o r the DC distribution board 8) through a signal line 20. As a result, the power information of the respective DC appliance s 5 connected to the control unit 9 is collected in the power conditioner 50. Alternatively, the DC appliances 5 connected to the control unit 9 through the respective DC supply lines 22 can transfer the power information on the electric power a mounts detected by themselves and the like to the power condi tioner 50 through the control unit 9 so that the information c an be collected in the memory device 50DB.

A plurality of DC appliances 5 is connected to the relay unit 10 through individual DC power lines 25. The relay unit 10 obtains the DC power for the DC appliances 5 through a DC power line 19, and determines which of the DC appliances 5 is to be operated based on an operation instruction obtained fro m the DC distribution board 8 through the signal line 21.

Further, the relay unit 10 controls the operations of th e DC appliances 5 determined to be operated in such a way that relays built therein turn on and off the supply of powers thr ough the DC power lines 25. A plurality of switches 26 for ma nually operating the DC appliances 5 is connected to the rela y unit 10. The DC appliances 5 are controlled by manually man ipulating the switches 26 to cause the relays to turn on and o ff the supply of powers to the DC power lines 25. The relay u nit 10 can transfer the power information on the electric pow er amounts consumed by the respective DC appliances 5 and the like to the power conditioner 50 (or the DC distribution boar d 8) through the signal line 21. As a result, the power infor mation of the respective DC appliances 5 connected to the rel ay unit 10 is collected in the memory device 50DB of the power conditioner 50.

In the power conditioner 50, various kinds of power info rmation of the power supply system 1 such as the power informa tion measured by the power conditioner 50 itself and the powe r information detected by the control unit 9 and the relay uni t 10 are collected in the memory device 50DB as power-related information 50J. The power-related information 50J can be ut ilized as power management data in the power supply system 1.

The power conditioner 50 can generate estimated consumption information indicating the current power consumption amount b ased on the power management data obtainable from the power-r elated information 50J.

DC sockets 27 installed in the house in the form of, e.g ., a wall socket or a floor socket, are connected to the DC di stribution board 8 through a DC power line 28. If the plugs ( not shown) of the DC appliances 5 are inserted into the DC soc kets 27, it is possible to directly supply the DC power to the DC appliances 5.

A power meter 29 capable of remotely measuring the amoun t of the power used by the commercial AC power source 2 is con nected between the commercial AC power source 2 and the AC dis tribution board 11. The power meter 29 is equipped with not o nly a function of remotely measuring an amount of power used b y the commercial AC power source 2 but also, e.g., a power lin e communications (PLC) function and a wireless communications function. The power meter 29 transmits measurement results to an electric power company or the like through power line co mmunications or wireless communications.

In the present embodiment, the communications between t he power meter 29 which transfers the measurement results to the electric power company and the power company is performed as follows. Communications is performed between the power c ompany and an electric pole through a well-known communicatio ns line. Moreover, communications is performed between the c ommunications line and the power meter 29 by virtue of power l ine communications in which a lead-in power line 2A connected to a step-down transformer TR (see Fig. 2) is used as a commu nications medium. The power meter 29 is also connected to the power conditioner 50 via a first communications part in such a way as to make communications with each other.

A display device 43 for visually displaying the power-re lated information 50J managed by the power conditioner 50 is connected to the AC distribution board 11 through a second co mmunications part. That is, in the present embodiment, the p ower conditioner 50 transmits the power-related information 5 0J to be displayed on the display device 43. The display devi ce 43 receives the power-related information 50J transmitted from the power conditioner 50.

The power supply system 1 is provided with a network sys tem 30 that makes it possible to control various kinds of home appliances through network communications. The network syst em 30 includes a home server 31 that functions as a control un it thereof. The home server 31 is connected to an outdoor man agement server 32 through an external communications network NT such as the Internet and is also connected to home applianc es 34 through a signal line 33. The home server 31 is operate d by the DC power supplied from the DC distribution board 8 th rough a DC power line 35.

A control box 36 for managing the operations of various kinds of home appliances controlled through network communica tions is connected to the home server 31 through a signal line 37. The control box 36 is connected to the controller 7 and the DC distribution board 8 through a signal line 17. The con trol box 36 is capable of directly controlling the DC applian ces 5 through a DC supply line 38. A gas/tap water meter 39 c apable of remotely measuring, e.g., the amounts of gas and ta p water used, is connected to the control box 36. The control box 36 is connected to an operation panel 40 of the network s ystem 30. A monitoring device 41 formed of, e.g., a door phon e extension unit, a sensor or a camera, is connected to the op eration panel 40.

If an operation instruction to operate the various kinds of home appliances is inputted through the external communic ations network NT, the home server 31 notifies the control bo x 36 of the operation instruction and operates the control bo x 36 so that the home appliances can be operated based on the operation instruction. Moreover, the home server 31 can prov ide various kinds of information obtained from the gas/tap wa ter meter 39 to the management server 32 through the external communications network NT. If an abnormality detected by the monitoring device 41 is notified to the home server 31 throug h the operation panel 40, the home server 31 provides the info rmation on the detected abnormality to the management server 32 through the external communications network NT.

Next, the specific configuration of the electric power m anagement system in accordance with the present embodiment w ill be described with reference to Fig. 2. Fig. 2 is a confi guration view specifically showing the configuration of the electric power management system.

As shown in Fig. 2, the power supply system 1 installed in a house or other places is connected through the power mete r 29 to an electric power system of an AC power source 2 manag ed by the electric power company. In other words, a plurality of power meters 29 including the ones not showing in Fig. 2 i s connected to the power system of the AC power source 2 throu gh individual lead-in power lines 2A extending from a step-do wn transformer TR. The power meter 29 is provided with an ext ension unit 68 having a function of making power line communi cations with a base unit 66 installed on an electric pole. Th e base unit 66 on the electric pole and the extension unit 68 of the power meter 29 are connected to each other through a po wer signal line 67 and a lead-in power line 2A with the step-d own transformer TR interposed therebetween. In other words, the lead-in power line 2A transmits AC power between the powe r system and the power meter 29 and serves as a communications medium through which a power line communications signal is t ransmitted between the base unit 66 and the extension unit 68 of the power meter 29.

The power company 60 has a dedicated communications line 64 used in remotely reading the amount of power measured by t he power meter 29. The communications line 64 is similar in f orm to the wiring line of the power system of the AC power sou rce 2. The base unit 66 is communicatively connected to the c ommunications line 64 through a communications line 65 and a media converter 63. In other words, the base unit 66 enables communications signals to be exchanged between the communicat ions line 64 and the power signal line 67 and converts the typ e of received signals into the type of transmitted signals an d vice versa. A meter reading server (not shown) of the power company 60 is communicatively connected to the communication s line 64. Thus, the meter reading server can perform a so-ca lled remote meter reading that acquires the amount of power ( the meter reading results) measured by the power meter 29 com municatively connected through the communications line 64 thr ough communications and records the amount of power thus acqu ired.

Further, the power company 60 has a system server 61 for managing the information on the AC power flowing through the power system of a commercial power source. The system server 61 is communicatively connected to the communications line 64 through a communications line 62 and a media converter 63. A ccordingly, the system server 61 of the power company 60 is co mmunicatively connected to the power meter 29, connected to t he communications line 64, through the communications line 64

For example, the system server 61 collects and manages t he power information such as the power generation amounts of a plurality of power plants held by the power company 60, the power consumption amounts of the respective power systems dis tinguished for respective areas, and the power amounts revers ely supplied from the solar cell 3 or the like to the power sy stems. The system server 61 enables the power company 60 to u se the information in managing the power systems of the comme rcial power source. In other words, the power meter 29 commun icatively connected to the system server 61 can transmit the power information to the system server 61 and can receive the power information from the system server 61.

In the electric power management system of the present e mbodiment, the power meter 29 and the power conditioner 50 ar e communicatively connected to each other via a communication s part at a side of the power meter (hereinafter referred to a s "first communications part").

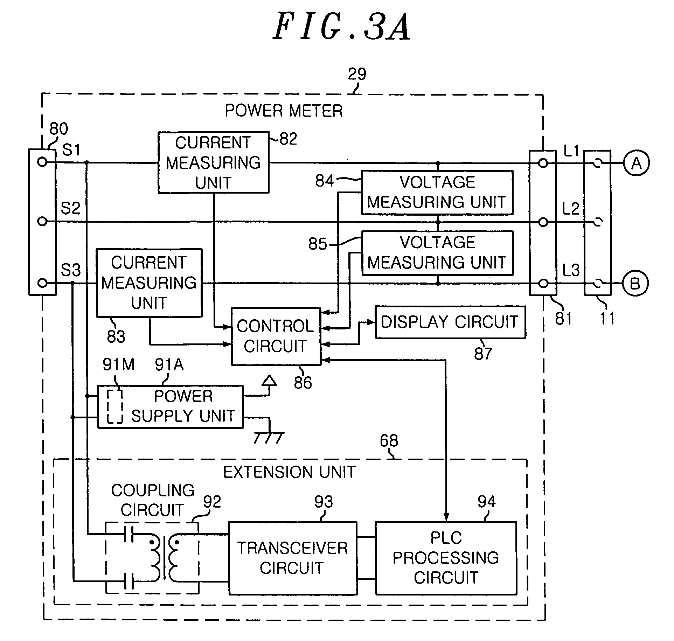

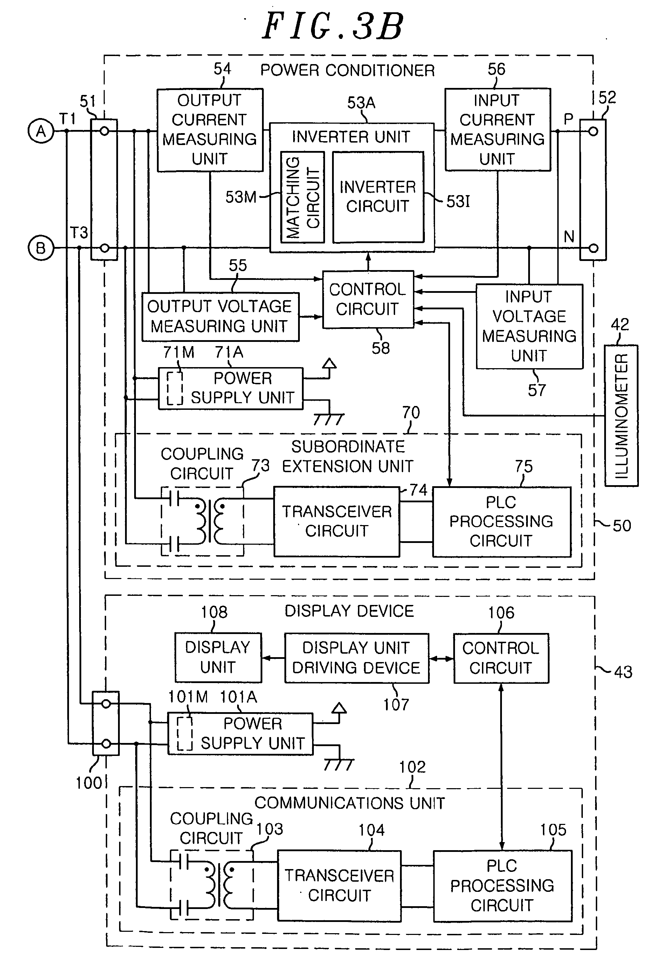

Next, the first communications part communicatively int erconnecting the power meter 29 and the power conditioner 50 and the communications part at a side of the display device (h ereinafter referred to as "second communications part") comm unicatively interconnecting the power conditioner 50 and the display device 43 will be described with reference to Figs. 3 A and 3B. Figs. 3A and 3B are schematic views showing a conne ction configuration that enables communications between the p ower meter 29 and the power conditioner 50 and between the pow er conditioner 50 and the display device 43.

As shown in Figs. 3A and 3B, the power meter 29 is a met er for measuring the current, voltage and power amount of the single-phase three-wire AC power inputted and outputted betwe en the power meter 29 and the power system of the commercial p ower source. Further, the power meter 29 includes a terminal block 80 connected to the power system of the commercial powe r source and a terminal block 81 connected to the power condit ioner 50 via an AC distribution board 11. The terminal block 80 is provided with terminals S1, S2 and S3 and the terminal b lock 81 is provided with terminals L1, L2 and L3. The termina l S1 and the terminal L1 are connected to each other. The ter minal S2 and the terminal L2 are connected to each other. The terminal S3 and the terminal L3 are connected to each other.

In the present embodiment, a single-phase AC power is su pplied to the terminals S1 and S3. The terminal S2 becomes a neutral line. Thus, the power meter 29 is provided with a cur rent measuring unit 82 for measuring the current flowing thro ugh the terminal S1, a current measuring unit 83 for measurin g the current flowing through the terminal S3, a voltage meas uring unit 84 for measuring the voltage between the terminals S1 and S2 and a voltage measuring unit 85 for measuring the v oltage between the terminals S3 and S2. Signals indicating t he current values measured by the current measuring units 82 and 83 and signals indicating the voltage values measured by the voltage measuring units 84 and 85 are inputted to a contro l circuit 86 so that the control circuit 86 can perform calcul ation of a power amount or the like.

The control circuit 86 transmits a signal indicating the calculated power amount to a display circuit 87 so that the d isplay circuit 87 can display the calculated power amount. T he display circuit 87 includes a display unit capable of visu ally displaying information. The power amount received from the control circuit 86 and other information are displayed on the display unit in a visible form such as numerical numbers.

The power meter 29 is provided with an extension unit 68 for making communications, through power lines connected to the terminal block 80 and the terminal block 81, with other un its connected to the power lines.

The extension unit 68 is configured to perform power lin e communications using the power lines as a communications me dium. The extension unit 68 includes: a coupling circuit 92 t hat uses the power lines connected to the terminals S1 and S3 as the communications medium, the coupling circuit 92 connect ed to the communications medium; a transceiver circuit 93 for transmitting and receiving a modulated signal to and from th e coupling circuit 92; and a power line communications proces sing circuit 94 for transmitting and receiving communications signal information to and from the transceiver circuit 93. A control circuit 86 is connected to the power line communicat ions processing circuit 94, so that signals through power lin e communications are transmitted and received therebetween.

Accordingly, the extension unit 68 acquires a power line communications signal, which is overlapped with the electric power and received through the power lines (the terminals S1 and S3) , and transfers the acquired signal to the control cir cuit 86. Furthermore, the extension unit 68 converts the sig nal outputted from the control circuit 86 to a power line comm unications signal and transmits the power line communications signal through the power lines (the terminals S1 and S3) by o verlapping same with the electric power. In order to efficie ntly overlap the power line communications signal with the el ectric power, it is preferred that the impedance of the power lines, i.e., the impedance between the terminals S1 and S3, i n a communications frequency band used for power line communi cations is kept high.

Further, the power meter 29 is provided with a power sup ply unit 91A for supplying the electric power required to dri ve the control circuit 86 and so forth. The power supply unit 91A is connected to the terminals S1 and S3. The power suppl y unit 91A converts the electric power inputted from the term inals S1 and S3 to the electric power required to drive the co ntrol circuit 86 and so forth. In general, a capacitor is con nected to an input circuit of the power supply unit 91A to pre vent noises from leaking to the outside. The capacitor serve s to reduce the impedance of the power lines connected to the input circuit of the power supply unit 91A, i.e., the impedan ce within a communications frequency band used for power line communications.

In the present embodiment, therefore, a matching circui t 91M, i.e., a so-called impedance booster, for avoiding redu ction of the impedance of the power lines within a power line communications frequency band is provided between the power l ine and the input circuit of the power supply unit 91A so that the power line communications can be efficiently performed b y the extension unit 68 of the power meter 29. As a result, t he power supply unit 91A can be connected to the terminals S1 and S3 while restraining reduction of the impedance between t he terminals S1 and S3 within a power line communications fre quency band.

The terminal block 81 of the power meter 29 is connected to the AC distribution board 11 through the terminals L1, L2 and L3. The AC distribution board 11 is connected to the powe r conditioner 50 through a terminal T1 corresponding to the t erminal L1 of the terminal block 81 and a terminal T3 correspo nding to the terminal L3 of the terminal block 81.

The power conditioner 50 converts the AC power inputted from an AC terminal block 51 to DC power and outputs the DC po wer to a DC terminal block 52. Moreover, the power conditione r 50 has a function of converting the DC power inputted from t he DC terminal block 52 to AC power and outputting the AC powe r to the AC terminal block 51. The AC power flowing through t he terminals T1 and T3 of the AC terminal block 51 of the powe r conditioner 50 is inputted to an inverter unit 53A after the current value thereof is measured by an output current measu ring unit 54 and the voltage value thereof is measured by an o utput voltage measuring unit 55.

The inverter unit 53A includes an inverter circuit 53I f or performing AC-DC conversion or DC-AC conversion of the ele ctric power and a matching circuit 53M for restraining reduct ion of the impedance between the terminals T1 and T3. In orde r to reduce the impedance of the power lines connected to the inverter circuit 53I, the matching circuit 53M is arranged be tween the inverter circuit 53I and the terminals T1 and T3. T he inverter unit 53A is connected to terminals P and N of the DC terminal block 52. The current value of the DC power flowi ng through the DC terminal block 52 is measured by an input cu rrent measuring unit 56 and the voltage value thereof is meas ured by an input voltage measuring unit 57.

The current value measured by the output current measuri ng unit 54, the voltage value measured by the output voltage m easuring unit 55, the current value measured by the input cur rent measuring unit 56 and the voltage value measured by the i nput voltage measuring unit 57 are inputted to a control circ uit 58. The control circuit 58 controls the DC-AC conversion or the AC-DC conversion of the electric power performed in th e power conditioner 50 by setting various kinds of informatio n on the power conversion with respect to the inverter unit 53 A.

The power conditioner 50 is provided with a subordinate extension unit 70 for making communications, through power li nes connected to the AC terminal block 51, with other units co nnected to the power lines. The subordinate extension unit 7 0 is configured to perform power line communications using th e power lines as a communications medium. The subordinate ex tension unit 70 has the same configuration as that of the exte nsion unit 68 of the power meter 29.

More specifically, the subordinate extension unit 70 in cludes: a coupling circuit 73 that uses the power lines conne cted to the terminals T1 and T3 as the communications medium, the coupling circuit 73 connected to the communications mediu m; a transceiver circuit 74 for transmitting and receiving a modulated signal to and from the coupling circuit 73; and a po wer line communications processing circuit 75 for transmittin g and receiving communications signal information to and fro m the transceiver circuit 74. A control circuit 58 is connect ed to the power line communications processing circuit 75, so that signals through power line communications are transmitt ed and received therebetween.

Accordingly, the subordinate extension unit 70 acquires a power line communications signal, which is overlapped with the electric power and received through the power lines (the terminals T1 and T3), and transfers the acquired signal to th e control circuit 58. Furthermore, the subordinate extension unit 70 converts the signal outputted from the control circu it 58 to a power line communications signal and transmits the power line communications signal through the power lines (the terminals T1 and T3) by overlapping same with the electric po wer.

In order to efficiently overlap the power line communica tions signal with the electric power, it is preferred as in th e extension unit 68 of the power meter 29 that the impedance o f the power lines, i.e., the impedance between the terminals T1 and T3, in a communications frequency band used for power l ine communications is kept high.

Further, the power conditioner 50 is provided with a pow er supply unit 71A for supplying the electric power required to drive the control circuit 58 and so forth. The power suppl y unit 71A is connected to the terminals T1 and T3. The power supply unit 71A converts the electric power inputted from th e terminals T1 and T3 to the electric power required to drive the control circuit 58 and so forth. Similar to the power sup ply unit 91A of the power meter 29, the power supply unit 71A serves to reduce the impedance of the power lines connected t o the input circuit thereof, i.e., the impedance within a com munications frequency band used for power line communications . In the power supply unit 71A, therefore, a matching circuit 71M, i.e., a so-called impedance booster, for avoiding reduc tion of the impedance of the power lines within a power line c ommunications frequency band is provided between the power li ne and the input circuit of the power supply unit 71A so that the power line communications can be efficiently performed by the subordinate extension unit 70. As a result, the power su pply unit 71A can be connected to the terminals T1 and T3 whil e restraining reduction of the impedance between the terminal s T1 and T3.

In the present embodiment, the extension unit 68 of the power meter 29 and the subordinate extension unit 70 of the po wer conditioner 50 make up a power line communications unit, i.e., a first communications part, that enables the power met er 29 and the power conditioner 50 to make power line communic ations with each other.

The AC distribution board 11 is connected to the display device 43 through the terminals T1 and T3. The display devic e 43 performs visible display using the signal acquired throu gh power line communications. The display device 43 includes a terminal block 100 connected to the AC distribution board 1 1 and the power conditioner 50 through the power lines. The d isplay device 43 includes a communications unit 102 for makin g communications, through power lines connected to the termin al block 100, with other units connected to the power lines. The communications unit 102 is configured to make power line communications using the power lines as a communications medi um. The configuration of the communications unit 102 is the s ame as the configuration of the extension unit 68 of the power meter 29 and the configuration of the subordinate extension unit 70 of the power conditioner 50.

In other words, the communications unit 102 includes: a coupling circuit 103 that uses the power lines connected to t he terminals T1 and T3 as the communications medium, the coup ling circuit 103 connected to the communications medium; a tr ansceiver circuit 104 for transmitting and receiving a modula ted signal to and from the coupling circuit 103; and a power l ine communications processing circuit 105 for transmitting an d receiving communications signal information to and from the transceiver circuit 104. A control circuit 106 is connected to the power line communications processing circuit 105, so t hat signals through power lines communications are transmitte d and received therebetween.

Accordingly, the communications unit 102 acquires a pow er line communications signal, which is overlapped with the e lectric power and received through the power lines (the termi nals T1 and T3), and transfers the acquired signal to the cont rol circuit 106. Furthermore, the communications unit 102 co nverts the signal outputted from the control circuit 106 to a power line communications signal and transmits the power line communications signal through the power lines (the terminals T1 and T3) by overlapping same with the electric power. In o rder to efficiently overlap the power line communications sig nal with the electric power, it is preferred as in the extensi on unit 68 of the power meter 29 and the subordinate extension unit 70 of the power conditioner 50 that the impedance of the power lines, i.e., the impedance between the terminals T1 an d T3, in a communications frequency band used for power line c ommunications is kept high.

The display device 43 further includes a display unit dr iving device 107 connected to the control circuit 106 and a di splay unit 108 driven and controlled by the display unit driv ing device 107. The control circuit 106 generates a control s ignal to be visibly displayed on the display unit 108 by proce ssing the signal transmitted from the communications unit 102 and transfers the control signal to the display unit driving device 107. Responsive to the control signal transferred fro m the control circuit 106, the display unit driving device 10 7 generates a drive signal for driving the display unit 108 an d transfers the drive signal to the display unit 108. In resp onse to the drive signal transferred from the display unit dr iving device 107, the display unit 108 displays the visible i nformation such as a numerical number and a graph on the displ ay surface thereof.

The display device 43 is provided with a power supply un it 101A for supplying the electric power required to drive th e control circuit 106 and so forth. The power supply unit 101 A is connected to the terminals T1 and T3. The power supply u nit 101A converts the electric power inputted from the termin als T1 and T3 to the electric power required to drive the cont rol circuit 106 and so forth. Similar to the power supply uni t 91A of the power meter 29 and the power supply unit 71A of t he power conditioner 50, the power supply unit 101A serves to reduce the impedance of the power lines connected to the inpu t circuit thereof, i.e., the impedance within a communication s frequency band used for power line communications.

In the power supply unit 101A, therefore, a matching cir cuit 101M, i.e., a so-called impedance booster, for avoiding reduction of the impedance of the power lines within a power l ine communications frequency band is provided between the pow er line and the input circuit of the power supply unit 101A so that the power line communications can be efficiently perfor med by the communications unit 102. As a result, the power su pply unit 101A can be connected to the terminals T1 and T3 whi le restraining reduction of the impedance between the termina ls T1 and T3 within a power line communications frequency ban d.

In the present embodiment, the subordinate extension un it 70 of the power conditioner 50 and the communications unit 102 of the display device 43 make up a power line communicatio ns unit, i.e., a second communications part, that enables the power conditioner 50 and the display device 43 to make power line communications with each other.

With such configuration, the extension unit 68 of the po wer meter 29 and the subordinate extension unit 70 of the powe r conditioner 50 are connected to each other through a pair of power lines including the power line connected to the termin als S1 and T1 and the power line connected to the terminals S3 and T3, so that they can make power line communications with each other. The subordinate extension unit 70 of the power co nditioner 50 and the communications unit 102 of the display d evice 43 are connected to each other through a pair of power 1 ines including the power line connected to the terminal T1 an d the power line connected to the terminal T3, so that they ca n make power line communications with each other.

Further, the subordinate extension unit 70 of the power conditioner 50 has two communications targets, i.e., the exte nsion unit 68 of the power meter 29 and the communications uni t 102 of the display device 43. By allowing the communication s targets to have different communications frequencies or by allowing the communications targets to have identification in formation that can identify the communications targets, it is possible for the subordinate extension unit 70 of the power c onditioner 50 to make independent communications with selecte d one of the communications targets.

As a result, the power information of the power meter 29 is transferred to the power conditioner 50 through power lin e communications and is collected in the memory device 50DB o f,the power conditioner 50 as power-related information 50J. The power conditioner 50 controls the power consumption amou nts of the respective DC appliances 5 based on the power manag ement data of the power-related information 50J stored in the memory device 50DB.

Consequently, the power conditioner 50 can control the A C power supplied from the commercial power source and can rev ersely supply the electric power generated by the solar cell 3 to the commercial power source as much as possible. In othe r words, the power conditioner 50 controls and manages the po wer consumption amount of the entire power supply system 1 ba sed on the power-related information 50J. At this time, the p ower conditioner 50 uses the power information of the power m eter 29 coinciding with the meter reading data of the power co mpany 60. It is therefore possible for the power conditioner 50 to more properly perform the electric power management of the entire power supply system 1.

Further, the power-related information 50J, including t he power information of the power meter 29, collected in the p ower conditioner 50 is transferred to the display device 43 a nd visually displayed to a user. At this time, the power info rmation of the power meter 29 is used to thereby display to a user the billing information on the electric power coinciding with the meter reading data of the power company 60.

Further, the power meter 29 is able to make communicatio ns with the system server 61 of the power company 60. Therefo re, if the power meter 29 acquires the power-related informat ion held by the system server 61, it is possible for the power conditioner 50 to acquire the same power-related information of the system server 61 as acquired by the power meter 29. O n the contrary, the system server 61 may acquire the power-re lated information 50J of the power conditioner 50 through the power meter 29. As a result, the power conditioner 50 can pe rform the electric power management based on the power-relate d information of the system server 61. In addition, the power company 60 can stabilize the electric power of the power syst em of the commercial power source by referring to the power-r elated information 50J of the power conditioner 50 acquired i n the system sever 61.

For example, upon acquiring the illuminance information of the illuminometer 42 from a plurality of power conditione rs 50, the system server 61 can estimate the illuminance chan ge in the information-acquired region. Moreover, the system server 61 can estimate the amount of power to be outputted to the power system of the commercial power source, based on the power generation information of the solar cell 3 stored in th e power conditioner 50. This makes it possible to stabilize t he power system of the commercial power source. In addition, upon acquiring the illuminance change estimation information from the system server 61, the power conditioner 50 can estim ate the power generation amount of the solar cell 3. This mak es it possible to appropriately perform the electric power ma nagement of the power supply system 1.

Further, for example, the system server 61 may provide t he information for stabilization of the system to the power c onditioner 50. In this case, the power conditioner 50 contro ls the input and output of the electric power between the powe r systems of the commercial power source based on the informa tion for stabilization of the system thus acquired. This con trol is performed by reducing the power consumption of the DC appliances 5 through the cutoff of the power supply or the cha nge of the operation mode or by not outputting the electric po wer generated by the solar cell 3. This also makes it possibl e to stabilize the power system of the commercial power sourc e.

As described above, the electric power management syste m in accordance with the present embodiment can provide the f ollowing effects.
(1) In general, the power meter 29 is arranged outside a house or a building and the power conditioner 50 is arranged inside the house or the building. This makes it difficult for the power conditioner 50 to acquire the power information su ch as the amount of power measured by the power meter 29.
   In view of this, the first communications part is provid ed to make communications between the power meter 29 and the p ower conditioner 50. As a result, the power conditioner 50 ca n easily acquire from the power meter 29 the power informatio n on the electric power inputted from or outputted to the comm ercial power source, which is measured by the power meter 29.
(2) The power information on the electric power generate d by the power generators such as the solar cell 3 and the bat tery 16, the power information on the electric power consumed by the respective DC appliances 5 and the power information o n the electric power measured by the power meter 29 are collec ted in the power conditioner 50. It is therefore possible to appropriately carry out the electric power management of the entire power supply system 1 based on the power information s tated above. As a result, it is possible for the power condit ioner 50 to accurately perform the centralized power manageme nt including the management of the input and output of the ele ctric power to and from the power system. This assists in enh ancing the utility value of the electric power management sys tem.
(3) The display device 43 can acquire the power informat ion collected in the power conditioner 50 through the second communications part and can visibly display the display infor mation generated from the acquired power information in the f orm of an image such as a numerical number or a graph. This m akes it easy to confirm the power information collected in th e power conditioner 50. Accordingly, it is possible to enhan ce the utility value of the electric power management system.
(4) By providing the subordinate extension unit 70 of th e power conditioner 50 and the communications unit 102 of the display device 43 and enabling communications between the sub ordinate extension unit 70 and the communications unit 102, i t is possible to easily transfer the power information of the power conditioner 50 to the display device 43.
(5) The communications between the power conditioner 50 and the display device 43 is performed by the power line commu nications in which the power line is used as a communications medium. This eliminates the need to install communications w iring lines. It is therefore possible to easily employ the el ectric power management system and to increase the chance of employment of the electric power management system.
(6) By providing the extension unit 68 (the first extens ion unit) of the power meter 29 and the subordinate extension unit 70 (the second extension unit) of the power conditioner 50 and enabling communications between the extension unit 68 and the subordinate extension unit 70, it is possible for the extension unit 68 and the subordinate extension unit 70 to ex change the power information of the power meter 29 and the pow er information of the power conditioner 50 with each other.
(7) The communications between the power meter 29 and th e power conditioner 50 is performed by the power line communi cations in which the power line is used as a communications me dium. This eliminates the need to install communications wir ing lines. It is therefore possible to easily employ the elec tric power management system and to increase the chance of em ployment of the electric power management system.
(8) The communications between the power meter 29 and th e power conditioner 50 and the communications between the pow er conditioner 50 and the display device 43 are performed thr ough the power line communications in the same communications method. In other words, the communications methods of the fi rst communications part and the second communications part ar e unified into the power line communications. This makes it p ossible to simplify the structure of the subordinate extensio n unit 70 of the power conditioner 50, which is included in bo th of the first communications part and the second communicat ions part. This also helps reduce the effort required in inst alling communications equipment.
(9) The system server 61 managing the power system can a cquire the power information of the power conditioner 50 to t hereby estimate the power consumption trend and the like by u sing the power management data based on the acquired power in formation. For example, if the system server 61 performs the management of the power system based on the power consumption trend, it is possible to further stabilize the electric powe r of the power system and to increase the utility value of the electric power management system.
(10) The power conditioner 50 acquires the power informa tion of the system server 61 from the power meter 29 and manag es the power information together with the electric power inp utted from and outputted to the power system. As a result, fo r example, if the power information of the system server 61 co ntains the information for stabilization of the system, the p ower conditioner 50 can adjust the electric power inputted to and outputted from the commercial power source, thereby stab ilizing the power system. If the power information of the sys tem server 61 contains the billing information, it is possibl e to perform the management of electric power according to th e charged fare.
(11) The power information on the power generation amoun t of the solar cell 3 whose power generation pattern varies la rgely depending on the daytime or nighttime and the weather i s managed by the power conditioner 50. It is therefore possib le to efficiently perform the management of electric power by adjusting the power consumption pattern in the house having the solar cell 3.

### (Second Embodiment)

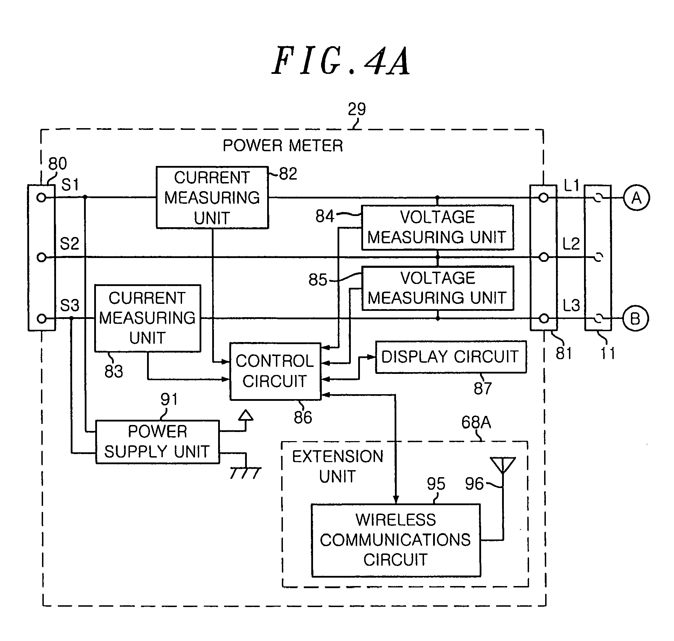

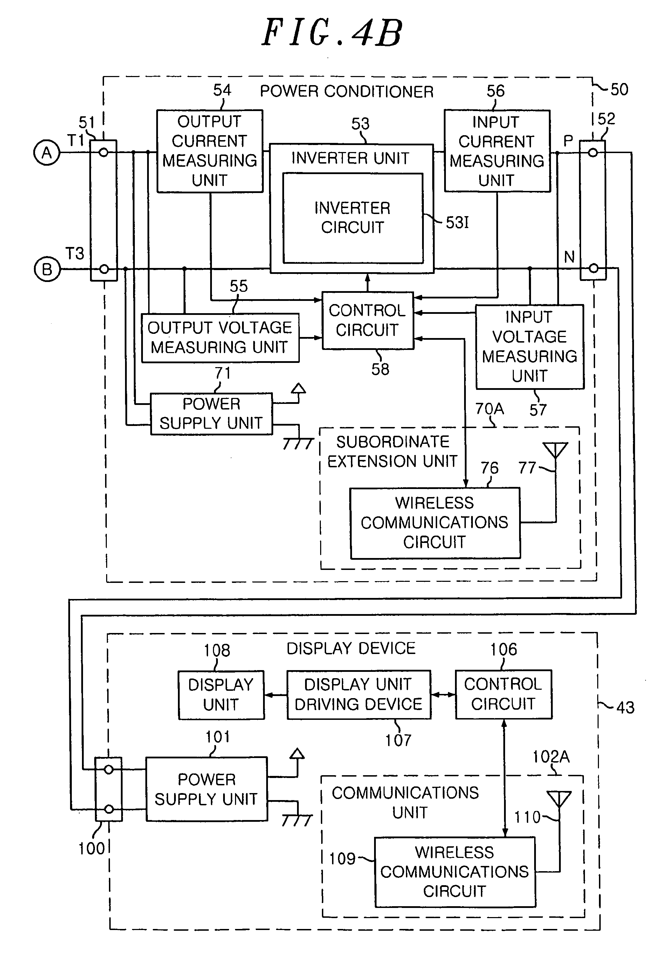

Next, an electric power management system in accordance with a second embodiment of the present invention will be des cribed with respect to Figs. 4A and 4B . Figs. 4A and 4B are views schematically showing a configuration in which the com munications between the power meter 29 and the power conditi oner 50 and the communications between the power conditioner 50 and the display device 43 are performed through wireless communications.

The second embodiment differs from the first embodiment in that the communications between the power meter 29 and the power conditioner 50 and the communications between the pow er conditioner 50 and the display device 43 are performed thr ough wireless communications. Other points remain the same as those of the first embodiment. In the present embodiment, description will be focused on the points differing from the first embodiment. Like reference numerals will be given to like parts, and redundant description thereof will be omitte d for the sake of convenience.

As shown in Figs. 4A and 4B, the power meter 29 includes current measuring units 82 and 83 for measuring the currents flowing through the terminals S1 and S3, a voltage measuring unit 84 for measuring the voltage between the terminals S1 a nd S2 and a voltage measuring unit 85 for measuring the volta ge between the terminals S2 and S3. The measured values are inputted to a control circuit 86. The power amount calculate d by the control circuit 86 is displayed on a display circuit 87.

An extension unit 68A for performing wireless communica tions is connected to the control circuit 86. The extension unit 68A includes a wireless communications circuit 95 and a n antenna 96. The wireless communications circuit 95 receiv es a signal from the control circuit 86 and transmits the rec eived signal as a wireless signal. Further, the wireless com munications circuit 95 receives a wireless signal and transf ers the received wireless signal to the control circuit 86.

The power meter 29 includes a power supply unit 91 for s upplying the electric power required to drive the control ci rcuit 86. The power supply unit 91 converts the electric pow er inputted from the terminals S1 and S3 to the electric powe r required to drive the control circuit 86.

Further, the power meter 29 includes a terminal block 81 having terminals L1, L2 and L3. The terminals L1 and L3 of the terminal block 81 are connected to the terminals T1 and T 3 of an AC terminal block 51 of a power conditioner 50 throug h an AC distribution board 11.

The power conditioner 50 includes an inverter unit 53 ar ranged between the AC terminal block 51 and the DC terminal b lock 52. The inverter unit 53 has an inverter circuit 53I fo r performing AC-DC conversion/DC-AC conversion of the electr ic power between the AC terminal block 51 and the DC terminal block 52. The current and the voltage of each of the power lines connected to the terminals T1 and T3 of the AC terminal block 51 are measured by an output current measuring unit 54 and an output voltage measuring unit 55. The current and th e voltage of each of the power lines connected to the termina ls P and N of the DC terminal block 52 are measured by an inp ut current measuring unit 56 and an input voltage measuring u nit 57. The current and voltage values thus measured are inp utted to a control circuit 58. The control circuit 58 drives and controls the inverter unit 53 based on the current and v oltage values thus measured.

A subordinate extension unit 70A for performing wireles s communications is connected to the control circuit 58. The subordinate extension unit 70A includes a wireless communica tions circuit 76 and an antenna 77. The wireless communicati ons circuit 76 receives a signal from the control circuit 58 and transmits the received signal as a wireless signal. The wireless communications circuit 76 receives a wireless signa 1 and transfers the received wireless signal to the control c ircuit 58.

Further, the power conditioner 50 includes a power suppl y unit 71 for supplying the electric power required to drive the control circuit 58. The power supply unit 71 converts th e electric power inputted from the terminals T1 and T3 to the electric power required to drive the control circuit 58.

In the present embodiment, the extension unit 68A of the power meter 29 and the subordinate extension unit 70A of the power conditioner 50 make up a wireless communications unit as a first communications part that enables wireless communi cations between the power meter 29 and the power conditioner 50.

In the power conditioner 50, the terminals P and N of th e DC terminal block 52 are connected to a terminal block 100 of the display device 43. The display device 43 includes a d isplaying unit 108 driven and controlled by a display unit dr iving device 107 under the control of a control circuit 106.

The display device 43 further includes a communications uni t 102A for performing wireless communications. The communic ations unit 102A includes a wireless communications circuit 109 and an antenna 110. The wireless communications circuit 109 receives a signal from the control circuit 106 and transm its the received signal as a wireless signal. The wireless c ommunications circuit 109 receives a wireless signal and tra nsfers the received wireless signal to the control circuit 1 06.

Further, the display device 43 includes a power supply u nit 101 for supplying the electric power required to drive th e control circuit 106. The power supply unit 101 converts th e electric power inputted from the terminals P and N to the e lectric power required to drive the control circuit 106.

In the present embodiment, the subordinate extension un it 70A of the power conditioner 50 and the communications uni t 102A of the display device 43 make up a wireless communicat ions unit as a second communications part that enables wirel ess communications between the power conditioner 50 and the display device 43.

With such configuration, the extension unit 68A of the p ower meter 29 and the subordinate extension unit 70A of the po wer conditioner 50 are connected to each other such that they can make wireless communications with each other. The subord inate extension unit 70A of the power conditioner 50 and the c ommunications unit 102A of the display device 43 are connecte d to each other such that they can make wireless communicatio ns with each other. The subordinate extension unit 70A of the power conditioner 50 has two communications targets, i.e., t he extension unit 68A of the power meter 29 and the communicat ions unit 102A of the display device 43. By allowing the comm unications targets to have different communications frequenci es or by allowing the communications targets to have identifi cation information that can identify the communications targe ts, it is possible for the subordinate extension unit 70A of t he power conditioner 50 to make independent communications wi th the selected one of the communications targets.

As a result, the power information of the power meter 29 is transferred to the power conditioner 50 and is collected i n the memory device 50DB of the power conditioner 50 as power-related information 50J. The power conditioner 50 controls a nd manages the power consumption amount of the entire power s upply system 1 based on the power management data of the powe r-related information 50J stored in the memory device 50DB. At this time, the power conditioner 50 uses the power informa tion of the power meter 29 coinciding with the meter reading d ata of the power company 60. It is therefore possible for the power conditioner 50 to more properly perform the electric p ower management of the entire power supply system 1.

Further, the power-related information 50J, including t he power information of the power meter 29, collected in the p ower conditioner 50 is transferred to the display device 43 a nd visually displayed to a user. At this time, the power info rmation of the power meter 29 is used to thereby display to a user the billing information on the electric power coinciding with the meter reading data of the power company 60.

As described above, the present embodiment can provide e ffects identical with or similar to effects (1) to (6) and (9) to (11) provided by the first embodiment that performs power line communications. In addition, the present embodiment can provide the following effects.
(12) Since the communications between the power conditi oner 50 and the display device 43 is performed by wireless com munications, it becomes unnecessary to install wiring lines f or communications purposes. This makes it possible to increa se the degree of freedom in arranging the electric power mana gement system.
(13) Since the communications between the power meter 29 and the power conditioner 50 is performed by wireless commun ications, it becomes unnecessary to install wiring lines for communications purposes. This makes it possible to increase the degree of freedom in arranging the electric power managem ent system and to facilitate use of the electric power manage ment system.

The respective embodiments described above may be modif ied as follows.

In the respective embodiments described above, there is illustrated a case in which the control unit 7 and the DC dist ribution board 8 are included in the power conditioner 50. Ho wever, the present invention is not limited thereto. Various devices, e.g., an AC distribution board, a control box and a home server, may be included in the power conditioner 50 as lo ng as they enables the power supply system to properly perfor m the management of electric power. On the contrary, the DC d istribution board 8 may be excluded from the power conditione r 50. This makes it possible to increase the degree of freedo m in configuring the power conditioner and to increase the ch ance of use of the electric power management system.

In the respective embodiments described above, there is illustrated a case in which the power conditioner 50 is provi ded with the memory device 50DB. However, the present invent ion is not limited thereto. The memory device may not be prov ided in the power conditioner as long as the power conditione r can manage the power information. In this case, the power i nformation may be stored in the home server or the like so tha t the power conditioner can gain access thereto. This makes i t possible to increase the degree of freedom in configuring t he power conditioner and to increase the chance of use of the electric power management system.

In the first embodiment described above, there is illust rated a case in which the display device 43 is connected to th e AC terminal block 51 of the power conditioner 50 so as to ma ke power line communications with the power conditioner 50.

However, the present invention is not limited thereto. The display device may be connected to the DC terminal block o f the power conditioner so as to make power line communicatio ns with the power conditioner 50. For example, as shown in Fi g. 5, a matching circuit 53N for restraining reduction of the impedance of the power line is further provided at the DC side of the inverter circuit 53I of the inverter unit 53B of the p ower conditioner 50 so as to avoid reduction of the impedance between the terminals P and N of the DC terminal block 52. Th ere are provided a transceiver circuit 78 and a coupling circ uit 79 for overlapping a power line communications signal wit h the terminals P and N of the DC terminal block 52. The tran sceiver circuit 78 is connected to the power line communicati ons processing circuit 75 for transmitting and receiving comm unications signals. The display device 43 is provided with a power supply unit coping with the input of DC power and having a matching circuit.

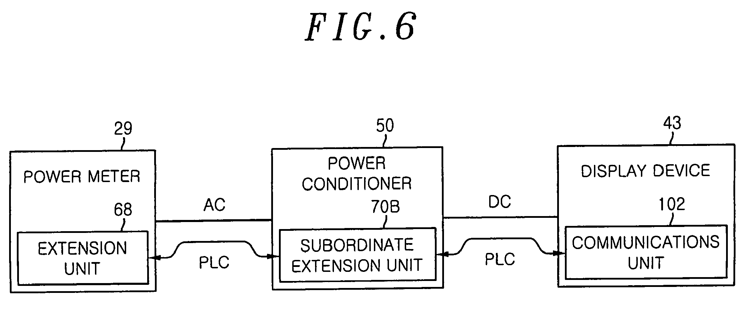

Accordingly, as shown in Fig. 6, the communications betw een the power meter 29 and the power conditioner 50 can be per formed through the power line communications (PLC) in which a signal is conveyed by the AC power. The communications betwe en the power conditioner 50 and the display device 43 can be p erformed through the power line communications (PLC) in which a signal is conveyed by the DC power.

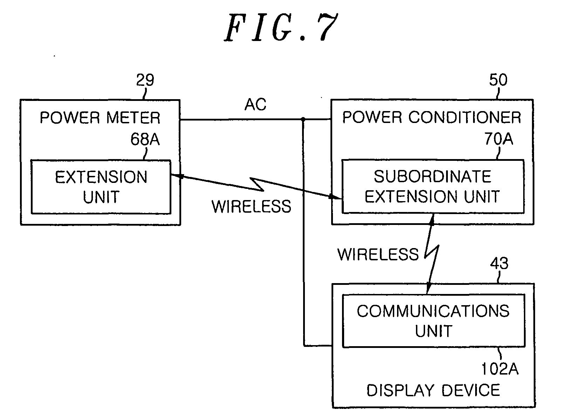

In the second embodiment, there is illustrated a case in which the DC power applied to the DC terminal block 52 of the power conditioner 50 is used as the source power of the displ ay device 43. However, the present invention is not limited t hereto. The source power of the display device 43 may be AC p ower and the power conditioner 50 may make wireless communica tions. As shown in, e.g., Fig. 7, it is therefore possible t o provide a combination in which the communications between t he power meter 29 and the power conditioner 50 and the communi cations between the power conditioner 50 and the display devi ce 43 are performed by wireless communications and in which A C power is used as the source power of the power meter 29, the power conditioner 50 and the display device 43.

In the respective embodiments described above, there is illustrated a case in which the power-related information 50J of the power conditioner 50 is displayed by the display devic e 43. However, the present invention is not limited thereto. If recognizable by a user, the power-related information of the power conditioner may be provided in the form of an image or a voice through a device having a user interface, such as a n operation panel 40, a door phone extension unit or a televis ion set, each of which is communicatively connected to the po wer conditioner 50. This makes it possible to increase the de gree of freedom in configuring the electric power management system.

In the respective embodiments described above, there is illustrated a case in which the power meter 29 makes communic ations with the system server 61. However, the present inven tion is not limited thereto. The power meter may be allowed t o make communications with a different base unit through the base unit installed in the electric pole. That is, the power meter makes communications with a different power meter throu gh the base unit, which makes it possible for the power condit ioner of the power meter to acquire the information of a power conditioner of the different power meter.

For example, seven to ten houses are connected to step-d own transformers. Base units are provided in a corresponding relationship with every step-down transformer or some of the step-down transformers. In this case, the power meter can ma ke communications through the base unit with another power me ter connected to the step-down transformer corresponding to t he base unit. This makes it possible to make interactive comm unications through the power meter in a limited area. For exa mple, the information on the availability of electric power c an be exchanged between the adjoining power conditioners. Th is configuration can also be used in transferring various kin ds of information, which is not directly related to the elect ric power, such as the notice information and the crime preve ntion information.

In the respective embodiments described above, there is illustrated a case in which the subordinate extension unit 70 of the power conditioner 50 is used as both the second extens ion unit of the first communications part and the subordinate extension unit of the second communications part. However, the present invention is not limited thereto. The second ext ension unit for the first communications part and the subordi nate extension unit for the second communications part may be independently provided in the power conditioner. This makes it possible to increase the degree of freedom in performing c ommunications between the power conditioners.

In the respective embodiments described above, there is illustrated a case in which the solar cell 3 is used as a powe r generating device. However, the present invention is not 1 imited thereto. The power generating device may be other dev ices having a power generating function, such as a battery, a fuel cell and a wind power generation device.

While the invention has been shown and described with re spect to the embodiments, it will be understood by those skil led in the art that various changes and modification may be ma de without departing from the scope of the invention as defin ed in the following claims.

## Claims

1. An electric power management system, comprising:
a power meter connected to a power system of a commercia 1 power source; and
a power conditioner connected to the power meter, a powe r generating device and an electric appliance,
wherein the power meter and the power conditioner exchan ge power information through a communications part at a side of the power meter.

2. The electric power management system of claim 1, wherein the power meter is connected to the power system of the comme rcial power source to acquire power information from an elect ric power inputted from the power system and an electric powe r outputted to the power system,
wherein the power conditioner is configured to collect p ower information of the power generating device; power inform ation of the electric appliance; and the power information on the electric power inputted from the power system and the pow er information on the electric power outputted to the power s ystem, which are acquired from the power meter through the co mmunications part at the side of the power meter, and to manag e the electric power inputted from the power system and the el ectric power outputted to the power system, based on the coll ected power information.

3. The electric power management system of claim 2, further comprising:
a display device for acquiring the power information col lected in the power conditioner from the power conditioner th rough a communications part at a side of the display device an d visually displaying the acquired power information on a dis play unit.

4. The electric power management system of claim 3, wherein the communications part at the side of the display device inc ludes a subordinate extension unit provided in the power cond itioner to transmit the power information collected in the po wer conditioner and a communications unit provided in the dis play device to receive the power information transmitted from the subordinate extension unit.

5. The electric power management system of claim 4, wherein the communications part at the side of the power meter includ es a first extension unit provided in the power meter to trans mit the power information acquired from the power meter and a second extension unit provided in the power conditioner to re ceive the power information transmitted from the first extens ion unit.

6. The electric power management system of claim 5, wherein the second extension unit of the power conditioner serves as the subordinate extension unit of the corresponding power con ditioner.

7. The electric power management system of any one of claim s 2 to 6, wherein the power meter further includes a device co mmunicatively connected to a system server for managing the p ower system of the commercial power source and configured to acquire the power information collected in the power conditio ner through the communications part at the side of the power m eter and transfer the acquired power information to the syste m server.

8. The electric power management system of claim 7, wherein the power conditioner is configured to acquire power informa tion held by the system server through the power meter and to manage the acquired power information.
